# EUROPEAN PATENT APPLICATION

(11) **EP 1 052 442 A1**
(43) Date of publication of application: **15.11.2000**
(21) Application number: 00109642.9
(22) Date of filing: 05.05.2000
(51) Int. Cl.: F16L 19/00, F16L 47/00, F16L 49/02

(54) **Resin pipe joint for a fluid apparatus having a quartz housing**

(30) Priority: 14.05.1999 JP 13403499
(71) Applicant: NIPPON PILLAR PACKING CO. LTD., Osaka-shi Osaka-fu (JP)
(72) Inventor: Nishio, Kiyoshi, Nippon Pillar Packing Co., Ltd., Sanda-shi, Hyogo (JP)
(74) Representative: Fleuchaus, Leo, Dipl.-Ing.

(57) **Abstract**

The resin pipe joint for a fluid apparatus having a quartz housing according to the invention is used for connecting a resin pipe line to a flow passage disposed in a quartz housing of a fluid apparatus, in various fields such as semi-conductor devices, medical services, food processing, and chemical industry. The resin pipe joint has a cylindrical joint body which is made of quartz. The joint body (6) is bonded to the quartz housing of the fluid apparatus by appropriate means such as fusion, thermal bonding, or welding. The joint body (6) is a component of a resin-pipe connecting mechanism. The resin-pipe connecting mechanism (7) has: a receiving portion (63) of the joint body (6); an outer sealing face (64) which is formed in the tip end of the receiving portion (63); a cylindrical ring member (71) which is to be forcedly inserted into an end portion of a resin pipe (2); and a pressing ring (72) which is screwed to a thread portion (65) disposed on the joint body (6). The resin pipe joint enables the resin pipe (2) to be directly connected to the quartz housing (5) of the fluid apparatus.

## Description

### Background of the Invention

### 1. Field of the Invention

The present invention relates to a resin pipe joint for a fluid apparatus having a quartz housing. Such a resin pipe joint is used for connecting a resin pipe line to a flow passage disposed in such a housing, in various fields such as semiconductor devices, medical services, food processing, and chemical industry.

### 2. Description of the Prior Art

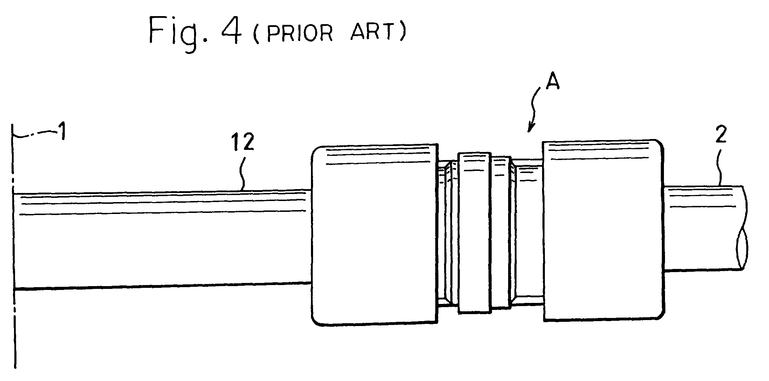

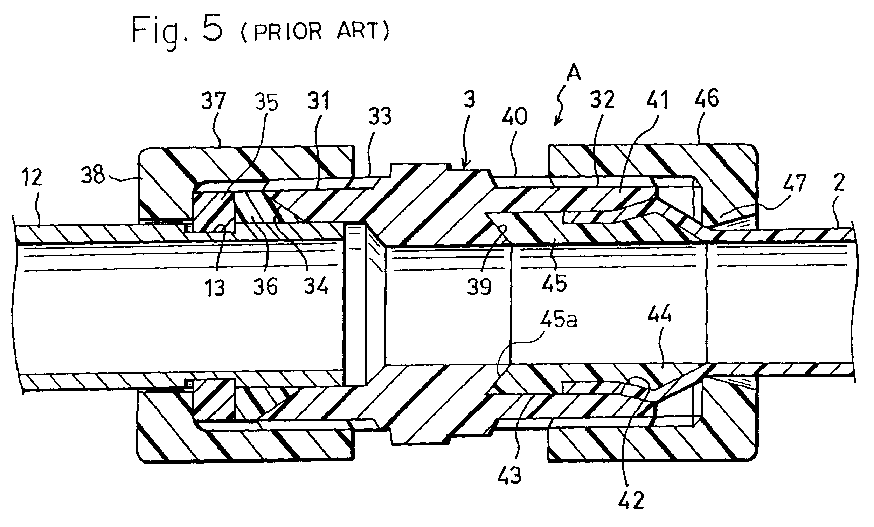

Fluid apparatuses are used in various fields such as semiconductor devices, medical services, food processing, and chemical industry. In some of such fluid apparatuses, for example, a liquid chamber and a heater, the housing is made of quartz. By contrast, a resin pipe which is made of fluororesin is preferably used in piping for handling a liquid having high purity in such fields. In the case where the housing of a fluid apparatus is made of quartz and a resin pipe is employed in piping as described above, a joint such as shown in Figs. 4 and 5 is used in connection of the resin pipe line to the housing of the fluid apparatus.

Fig. 4 is a schematic view showing a use state of the joint of the prior art, and Fig. 5 is a section view of the prior art joint.

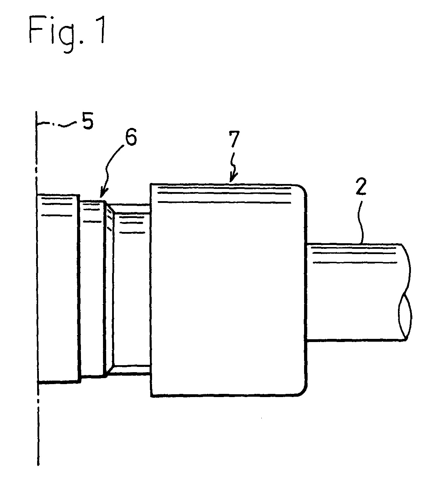

Referring to Fig. 4, 1 denotes a quartz housing of a fluid apparatus such as a liquid chamber or a heater. It is impossible to directly connect piping configured by a resin pipe 2 to the quartz housing 1. Therefore, connection between the two members is performed via a joint A having a function of connecting a quartz pipe 12 connected to the housing 1, and the resin pipe 2 to each other.

The connection structure using the joint A will be described in detail with reference to Fig. 5. In the joint A, one end side of a cylindrical joint body 3 is formed as a quartz-pipe connecting portion 31, and the other end side is formed as a resin-pipe connecting portion 32.

In the quartz-pipe connecting portion 31, the outer peripheral face has an external thread portion 33, and the tip end face is formed as a funnel-like tapered face 34. A lock ring 35 which is fitted into a groove 13 of the quartz pipe 12, and a ferrule 36 which is fitted onto the quartz pipe 12 are pressed by a pressing portion 38 of a pressing ring 37 screwed with the external thread portion 33, and the funnel-like tapered face 34. In the side of the quartz-pipe connecting portion 31, the sealing properties are maintained by the pressed areas of the ferrule 36, the funnel-like tapered face 34, and the quartz pipe 12, and the like.

By contrast, in the resin-pipe connecting portion 32, an external thread portion 40 formed on the outer peripheral face, and an outer sealing face 42 having a funnel-like tapered shape are disposed. A cylindrical ring member 43 which is used in combination with the resin-pipe connecting portion 32 comprises a basal portion 44 having a mountain-like section shape, and a projected portion 45 which is projected from an end portion of the resin pipe 2 by forcedly inserting the basal portion 44 into the end portion of the resin pipe 2. The pipe wall of the end portion of the resin pipe 2 into which the basal portion 44 is forcedly inserting is deformed into a mountain-like shape. The end portion of the resin pipe 2 which is deformed into a mountain-like shape as described above is inserted together with the cylindrical ring member 43 into the resin-pipe connecting portion 32, so that the end portion of the resin pipe 2 is pressingly held by the cooperation of the resin-pipe connecting portion 32 and the cylindrical ring member 43. A pressing portion 47 of a pressing ring 46 which is screwingly fastened onto the external thread portion 40 presses the pipe wall which is deformed into a mountain-like shape. This pressing causes the outer peripheral face of the mountain-like pipe wall of the resin pipe 2 to be pressed against the outer sealing face 42. A step-like inner sealing face 39 is formed in the inner periphery of the joint body 3. The tip end face 45a of the projected portion 45 of the cylindrical ring member 43 which receives the fastening force exerted by the pressing ring 46 is pressed against the inner sealing face 39. The inner peripheral face of the joint body 3 is flushly continuous with that of the cylindrical ring member 43. In the side of the resin-pipe connecting portion 32, the sealing properties are maintained by the pressed areas of the outer sealing face 42, the pipe wall of the resin pipe 2 which is deformed into a mountain-like shape, the cylindrical ring member 43, the inner sealing face 39, and the projected portion 45 of the cylindrical ring member 43, and the like. Since the inner peripheral face of the joint body 3 is flushly continuous with that of the cylindrical ring member 43, the liquid is prevented from stagnating.

In the above-described joint A, all the components such as the joint body 3 and the pressing ring 37 are made of fluororesin. In the case where piping configured by the resin pipe 2 is to be connected to the quartz housing 1 of the fluid apparatus shown in Fig. 4, a work of connecting the quartz pipe 12 to the quartz-pipe connecting portion 31 of the joint A must be conducted in addition to works of connecting the quartz pipe 12 to the housing 1, and the end portion of the resin pipe 2 to the resin-pipe connecting portion 32 of the joint A.

However, the joint A in which all the components are made of fluororesin is expensive. Furthermore, there arise problems in that a very long time period is required for correctly conducting the above-mentioned works and the works are cumbersome, and that the number of the sealing areas is so large that the sealing properties are easily impaired. Moreover, a space for installing the quartz pipe 12 and the joint A must be ensured. This may cause fears that difficulties occur with respect to the space, and that the degree of freedom in arrangement of pipes is lowered.

### Summary of the Invention

The present invention has been conducted in view of the above-mentioned problems and circumstances.

It is an object of the invention to enable a resin pipe to be directly connected to a quartz housing of a fluid apparatus without using the joint A and the quartz pipe 12 of the prior art which have been described with reference to Figs. 4 and 5.

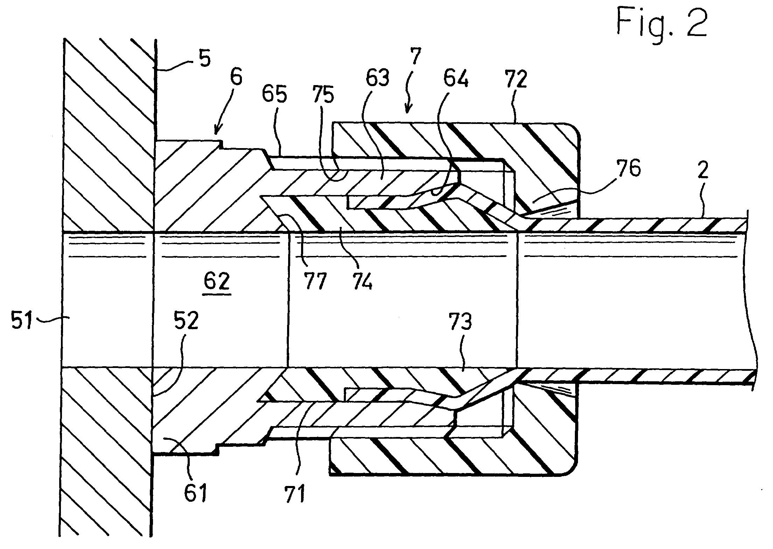

Means which are employed in the invention, and their function will be described by using reference numerals which are used in Figs. 1 and 2. The reference numerals are used in order to facilitate the understanding of the invention. The use of the reference numerals is not be intended as restricting the invention.

The resin pipe joint for a fluid apparatus having a quartz housing according to the invention has a cylindrical joint body 6. The joint body 6 forms a resin-pipe connecting mechanism 7. The joint body 6 is made of quartz, and bonded to a quartz housing 5 of the fluid apparatus. The joint body 6 has a fluid flow passage 62. The fluid flow passage 62 communicates with a fluid flow passage 51 formed in the housing 5. Means for bonding the housing 5 to the joint body 6 can be realized by means such as fusion, thermal bonding, or welding.

In the resin pipe joint, since the joint body 6 forms the resin-pipe connecting mechanism 7, the resin pipe 2 can be connected to the joint body 6. Since the joint body 6 is made of quartz and bonded to the quartz housing 5, moreover, the resin pipe 2 is enabled to be connected to the housing 5 via the joint body 6, only by connecting the resin pipe 2 to the joint body 6.

In the invention, the resin-pipe connecting mechanism 7 may be configured in the following manner. The resin-pipe connecting mechanism 7 may be configured so as to comprise: a cylindrical receiving portion 63 disposed in the joint body 6; a cylindrical ring member 71 which is to be forcedly inserting into an end portion of a resin pipe, and which cooperates with the receiving portion 63 to pressingly hold the resin pipe end portion that is inserted into the receiving portion 63; and a pressing ring 72 which is screwed to a thread portion 65 disposed on the joint body 6, thereby locking the resin pipe end portion onto which the cylindrical ring member 71 is forcedly inserted, and which is inserted into the receiving portion 63.

In the invention, preferably, the resin-pipe connecting mechanism 7 is configured in the following manner. The resin-pipe connecting mechanism 7 is preferably configured so as to comprise: a cylindrical receiving portion 63 disposed in the joint body 6; a funnel-like tapered outer sealing face 64 which is formed in the receiving portion 63; a cylindrical ring member 71 which is to be forcedly inserted into an end portion of a resin pipe to deform a pipe wall of the resin pipe end portion into a mountain-like shape, and which cooperates with the receiving portion 63 to pressingly hold the resin pipe end portion that is inserted into the receiving portion 63; and a pressing ring 72 which is screwed to a thread portion 65 disposed on the joint body 6, thereby pressing the resin pipe 2 to press an outer peripheral face of the mountain-like pipe wall of the resin pipe 2 against the outer sealing face 64.

Preferably, the cylindrical ring member 71 has: a basal portion 73 which is to be forcedly inserted into the resin pipe end portion, and which has a mountain-like section shape; and a projected portion 74 which is projected from the resin pipe end portion by forcedly inserting the basal portion 73 into the resin pipe end portion, a step-like inner sealing face 77 is formed in an inner periphery of the joint body 6, and a tip end face of the projected portion 74 which receives a fastening force exerted by the pressing ring 72 is pressed against the inner sealing face 77. In this case, it is critical that the tip end of the projected portion 74 abuts against the inner sealing face 77. The tip end may have any shape selected from various shapes. Preferably, the inner peripheral face of the joint body 6 is flushly continuous with that of the cylindrical ring member 71.

The resin-pipe connecting mechanism 7 and the cylindrical ring member 71 are structured in the same manner as the side of the resin-pipe connecting portion 32 of the prior art joint A of Fig. 5. Therefore, the resin pipe 2 can be connected to the joint, and, when connection with the resin pipe 2 is once attained, predetermined sealing properties are ensured, and liquid is prevented from stagnating. The resin-pipe connecting mechanism 7 and the cylindrical ring member 71 will be described in detail by way of embodiments later.

According to the invention, a resin pipe can be directly connected to a quartz housing of a fluid apparatus without using the joint and the quartz pipe of the prior art which have been described with reference to Figs. 4 and 5. Therefore, it is not necessary to conduct cumbersome works which must be conducted in the prior art, i.e., those of connecting the quartz pipe to the housing, and the quartz pipe to the quartz-pipe connecting portion of the joint. It is not required to use an expensive quartz pipe. In addition, as compared with the case where a quartz pipe is used, fears that difficulties occur with respect to the space, and that the degree of freedom in arrangement of pipes is lowered can be eliminated.

### Brief Description of the Drawings

Fig. 1 is a schematic view showing a use state of an embodiment of the invention;
Fig. 2 is a section view showing the internal structure of the embodiment of the invention;
Fig. 3 is a section view showing the internal structure of another embodiment of the invention;
Fig. 4 is a schematic view showing a use state of a joint of the prior art; and
Fig. 5 is a section view of the prior art joint.

### Detailed Description of the Preferred Embodiment

Referring to Figs. 1 and 2, 5 denotes a quartz housing of a fluid apparatus such as a liquid chamber or a heater. The housing 5 corresponds to the housing 1 which has been described with reference to Figs. 4 and 5, and has a fluid flow passage 51.

The reference numeral 6 denotes a cylindrical joint body which is made of quartz, and its basal portion 61 is bonded to a peripheral edge portion 52 of the flow passage 51 of the housing 5. Therefore, the flow passage 51 of the housing 5 communicates with a fluid flow passage 62 of the joint body 6. Means for bonding the housing 5 to the joint body 6 can be realized by means such as fusion, thermal bonding, or welding.

The joint body 6 itself constitutes a portion of the resin-pipe connecting mechanism 7. Components constituting other portions of the resin-pipe connecting mechanism 7 are attached to the joint body 6. Hereinafter, the structure of connecting the resin pipe 2 by the resin-pipe connecting mechanism 7 will be described in detail with reference to Fig. 2.

As shown in Fig. 2, the resin-pipe connecting mechanism 7 comprises a cylindrical receiving portion 63 disposed in the joint body 6, a cylindrical ring member 71, and a pressing ring 72. The receiving portion 63 corresponds to the resin-pipe connecting portion 32 which has been described with reference to Fig. 5. The cylindrical ring member 71 and the pressing ring 72 are strictly identical in configuration with the cylindrical ring member 43 and the pressing ring 46 of the prior art joint body A which have been described with reference to Fig. 5.

Consequently, the receiving portion 63 has an external thread portion 65 formed on the outer peripheral face, and a funnel-like tapered outer sealing face 64 which is formed in the tip end portion. The cylindrical ring member 71 has: a basal portion 73 which is to be forcedly inserted into an end portion of the resin pipe 2, and which has a mountain-like section shape; and a projected portion 74 which is projected from the end portion of the resin pip. 2 by forcedly inserting the basal portion 73 into the end portion of the resin pipe. The pipe wall of the end portion of the resin pipe 2 into which the basal portion 73 is forcedly inserted is deformed into a mountain-like shape. The end portion of the resin pipe 2 which is deformed into a mountain-like shape as described above is inserted together with the cylindrical ring member 71 into the receiving portion 63, so that the end portion of the resin pipe 2 is pressingly held by the cooperation of the receiving portion 63 and the cylindrical ring member 71. The pressing ring 72 has an internal thread portion 75 on the inner peripheral face, and is fastened by screwing the internal thread portion 75 to the external thread portion 65 of the receiving portion 63. This fastening of the pressing ring 72 causes a pressing portion 76 of the pressing ring 72 to press the pipe wall of the resin pipe 2 which is deformed into a mountain-like shape. As a result of this pressing, the outer peripheral face of the mountain-like pipe wall of the resin pipe 2 is pressed against the outer sealing face 64. A step-like inner sealing face 77 is formed in the inner periphery of the joint body 6. The tip end face of the projected portion 74 of the cylindrical ring member 71 which receives the fastening force exerted by the pressing ring 72 is pressed against the inner sealing face 77. The inner peripheral face of the joint body 6 is flushly continuous with that of the cylindrical ring member 71.

In the connecting portion of the resin pipe 2 which has been described above, the sealing properties are maintained by the pressed areas of the outer sealing face 64, the pipe wall of the resin pipe 2 which is deformed into a mountain-like shape, the cylindrical ring member 71, the inner sealing face 77, and the projected portion 74 of the cylindrical ring member 71, and the like. Since the inner peripheral face of the joint body 6 is flushly continuous with that of the cylindrical ring member 71, the liquid is prevented from stagnating.

When the resin pipe 2 is connected to the joint body 6 bonded to the housing 5 of the fluid apparatus as described above, the resin pipe 2 is connected to the housing 5 via the joint body 6. Unlike the prior art example which has been described with reference to Fig. 4, therefore, it is not required to use the expensive quartz pipe A. Furthermore, it is not required to conduct the works of connecting the quartz pipe 12 to the housing 1, and the quartz pipe 12 to the quartz-pipe connecting portion 31 of the joint A.

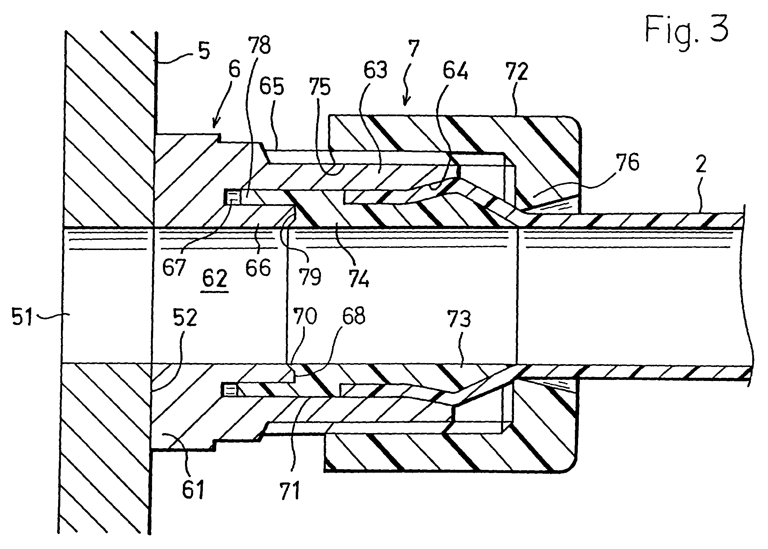

Fig. 3 is a section view showing the internal structure of another embodiment of the invention. The embodiment is different from the configuration shown in Fig. 2, in the following points. Namely, an inner cylindrical portion 66 is projected from the basal portion 61 of the joint body 6 so as to form an annular groove 67 on the side of the outer periphery of the inner cylindrical portion 66; a cylindrical portion 78 which is fitted into the annular groove 67 is disposed in the projected portion 74 of the cylindrical ring member 71; an abutting face 79 which is stepwisely formed on the inner side of the root of the cylindrical portion 78 is closely contacted with a receiving face 68 which is formed by the tip end face of the inner cylindrical portion 66; and a receiving piece 70 which blocks inward bending of the inner cylindrical portion 66 is disposed in the cylindrical ring member 71.

In the embodiment of Fig. 3, the sealing properties are maintained also by the close contact area between the abutting face 79 of the cylindrical portion 78 and the receiving face 68 of the inner cylindrical portion 66. The sealing properties can be exerted when the abutting face 79 of the cylindrical portion 78 is closely contacted with the receiving face 68 of the inner cylindrical portion 66. As far as the faces are closely contacted with each other, therefore, the sealing properties can be exerted even when the shapes of the tip end of the inner cylindrical portion 66, and the abutting face 79 of the inner side of the root of the cylindrical portion 78 are different from those which have been described with reference to Fig. 3. The other configuration and functions are identical with those which have been described with reference to Fig. 2. Therefore, identical or equivalent components are denoted by the same reference numerals, and their detailed description is omitted.

The entire disclosure of Japanese Patent Application No. 11-134034 filed on November 14, 1999 including specification, claims, drawings and summary are incorporated herein by reference in its entirety.

## Claims

1. A resin pipe joint for a fluid apparatus having a quartz housing, said pipe joint comprising a cylindrical joint body, wherein said pipe joint comprises:
said cylindrical joint body which is made of quartz and bonded to said quartz housing of said fluid apparatus, and which forms a resin-pipe connecting mechanism; and
a flow passage which is formed in said joint body, and which is to communicate with a flow passage formed in said housing.

2. A resin pipe joint for a fluid apparatus having a quartz housing according to claim 1, wherein means for bonding said housing to said joint body is means based on fusion, thermal bonding, or welding.

3. A resin pipe joint for a fluid apparatus having a quartz housing according to claim 1, wherein said resin-pipe connecting mechanism comprises: a cylindrical receiving portion disposed in said joint body; a cylindrical ring member which is to be forcedly inserted into an end portion of a resin pipe, and which cooperates with said receiving portion to pressingly hold the resin pipe end portion that is inserted into said receiving portion; and a pressing ring which is screwed to a thread portion disposed on said joint body, thereby locking the resin pipe end portion onto which said cylindrical ring member is forcedly inserted, and which is inserted into said receiving portion.

4. A resin pipe joint for a fluid apparatus having a quartz housing according to claim 1, wherein said resin-pipe connecting mechanism comprises: a cylindrical receiving portion disposed in said joint body; a funnel-like tapered outer sealing face which is formed in said receiving portion; a cylindrical ring member which is to be forcedly inserted into an end portion of a resin pipe to deform a pipe wall of the resin pipe end portion into a mountain-like shape, and which cooperates with said receiving portion to pressingly hold the resin pipe end portion that is inserted into said receiving portion; and a pressing ring which is screwed to a thread portion disposed on said joint body, thereby pressing the resin pipe to press an outer peripheral face of the mountain-like pipe wall of the resin pipe against said outer sealing face.

5. A resin pipe joint for a fluid apparatus having a quartz housing according to claim 4, wherein said cylindrical ring member has: a basal portion which is to be forcedly inserted into the resin pipe end portion, and which has a mountain-like section shape; and a projected portion which is projected from the resin pipe end portion by forcedly inserting said basal portion into the resin pipe end portion.

6. A resin pipe joint for a fluid apparatus having a quartz housing according to claim 5, wherein a step-like inner sealing face is formed in an inner periphery of said joint body, and a tip end face of said projected portion which receives a fastening force exerted by said pressing ring is pressed against said inner sealing face.

7. A resin pipe joint for a fluid apparatus having a quartz housing according to claim 5, wherein an inner peripheral face of said joint body is flushly continuous with an inner peripheral face of said cylindrical ring member.

8. A resin pipe joint for a fluid apparatus having a quartz housing according to claim 6, wherein an inner peripheral face of said joint body is flushly continuous with an inner peripheral face of said cylindrical ring member.
